# EUROPÄISCHE PATENTSCHRIFT

(11) **EP 3 468 784 B1**
(45) Veröffentlichungstag und Bekanntmachung des Hinweises auf die Patenterteilung: **25.09.2024**
(21) Anmeldenummer: 17732731.9
(22) Anmeldetag: 18.05.2017
(51) Int. Cl.: B29D 30/06

(54) **VERFAHREN UND VORRICHTUNG ZUR HANDHABUNG VON REIFEN**
METHOD AND DEVICE FOR HANDLING TYRES
PROCÉDÉ ET DISPOSITIF POUR MANIPULER DES PNEUMATIQUES

(30) Priorität: 14.06.2016 DE 102016007315
(43) Veröffentlichungstag der Anmeldung: 17.04.2019
(73) Patentinhaber: Harburg-Freudenberger Maschinenbau GmbH, 21079 Hamburg (DE)
(72) Erfinder: SEEVERS, Jörn, 21337 Lüneburg (DE); MEINCKE, Rüdiger, 22547 Hamburg (DE)
(74) Vertreter: Klickow & Wetzel PartGmbB
(86) Internationale Anmeldenummer: PCT/DE2017/000143
(87) Internationale Veröffentlichungsnummer: WO 2017/215688

(56) Entgegenhaltungen:
- EP-A2- 0 099 507
- DE-A1- 102011 011 423
- DE-A1- 3 443 947
- DE-A1- 3 918 209
- JP-A- 2002 273 733
- JP-A- 2008 284 838
- JP-A- S4 937 982
- US-A1- 2015 328 851

## Beschreibung

Die Erfindung betrifft eine Handhabungsvorrichtung für Reifen, aufweisend wenigstens einen Ausleger, wobei der wenigstens eine Ausleger mit einem ersten Auslegerschwenkpunkt an einer Aufnahme derart festgelegt ist, dass ein Verschwenken des wenigstens einen Auslegers relativ zur Aufnahme unterstützt ist und dass der wenigstens eine Ausleger einen zweiten Auslegerschwenkpunkt aufweist, sodass wenigstens ein Greifwerkzeug mit dem wenigstens einen Ausleger gekoppelt ist sowie bei der wenigstens ein zweites Greifwerkzeug mit dem zweiten Auslegerschwenkpunkt gekoppelt ist und dass die wenigstens zwei Greifwerkzeuge relativ zu wenigstens einem Auslegerschwenkpunkt schwenkbar sind.

Weiterhin betrifft die Erfindung ein Verfahren zur Realisierung eines Belade- und Entladezyklusses mit Reifen einer Reifenvulkanisiermaschine.

Die Herstellung eines Reifens beispielsweise für Fahrzeuge wie Autos oder Motorräder ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung, miteinander verbunden werden müssen. Der Vulkanisierungsprozess ist ebenfalls maßgeblich hinsichtlich der Material- und Haftungseigenschaften des fertigen Reifens.

Nicht nur der fertige Reifen als Endprodukt des Reifenherstellungsprozesses, sondern bereits der Reifenrohling ist ein hochkomplexes und aus vielen Halbzeugelementen bestehendes Bauteil. Infolge des vielschichtigen Aufbaus müssen die Einzelkomponenten zunächst und vor einem Vulkanisierungsvorgang zusammengefügt werden, d.h. die Reifenkomponenten werden größenrichtig vereinzelt und lage-, positions-, orientierungsgenau einer Karkasstrommel zugeführt, die sich innerhalb einer Reifenaufbaumaschine befindet. Auf diese Weise wird der Reifenrohling hergestellt und für die Vulkanisierung vorbereitet.

Viele der Reifenkomponenten liegen als bahn- und/oder bogenförmigen Halbzeuge vor: Verschiedene Gummimischungen und kautschukbasierende Kompositwerkstoffe, Textilgewebe bzw. Textilkord, Stahlgürtelgewebe und kautschukummantelte Wulstkerne. Um diese bahn- und/oder bogenförmige Halbzeuge der Karkasstrommel zuzuführen, werden innerhalb einer Reifenaufbaumaschine teilweise Lagenserver verwendet.

Infolge der erheblichen Anzahl von Produktionsschritten sind Produktionsstätten in großen Hallen realisiert und umfassen für die einzelnen Produktionsschritte geeignete Maschinen, Anlagen und Handhabungsmittel. Ergänzt werden diese Produktionslinien oder Produktionszentren durch Prestream- und Downstream- Equipment zur Vorbereitung von Reifenkomponenten oder Nachbereitung beziehungsweise Verpackung der fertigen Reifen. Um die Materialflüsse in und für Reifenherstellungsanlagen realisieren zu können, werden auch Transporteinrichtungen vorgesehen.

Typischerweise werden die Reifenrohlinge von Reifenaufbaumaschinen hergestellt und zunächst in einem Lager bevorratet. Aus diesem Lager, das praktisch als eine Art erster Pufferspeicher für den nachfolgenden Herstellungsprozess dient, werden die Reifenrohlinge dann bedarfsabhängig kontinuierlich oder diskontinuierlich entnommen und zu den Reifenheizpressen transportiert, um dort vulkanisiert zu werden.

In Produktionshallen mit einer großen Produktionskapazität stehen die Reifenheizpressen häufig reihenartig nebeneinander und die Reihen der Maschinen werden von befahrbaren Wegen getrennt. Eine Zufuhr der Reifenrohlinge erfolgt im Rahmen eines Transportequipments häufig unter Verwendung von Schienen, die in einem oberen Hallenbereich installiert sind. Entlang der Schienen sind gesteuert Transport- und Halteeinrichtungen verfahrbar. Gemäß einer Variante eines bekannten Produktionsablaufes verlaufen die Schienen oberhalb der Heizpressen und die Reifenrohlinge werden über Halteeinrichtungen, die an Ketten montiert sind, in den Bereich der Reifenheizpresse abgesenkt.

Diese häufig automatisch arbeitenden, unter der Hallendecke auf Schienen bewegten Transporteinrichtungen für Reifenrohlinge transportieren die Reifenrohlinge von einer Pufferstation zu den Reifenvulkanisiermaschinen. Dabei fahren die Transportwagen auf Schienen bis zu der jeweiligen Heizstelle und beladen den Rohlingsstand der Reifenvulkanisiermaschine. Der Rohlingsstand befindet sich auf Hallenbodenniveau und somit üblicherweise auf Höhe der Reifenvulkanisiermaschinen. Aus Sicherheitsgründen ist ein großes Sicherheits-Scannerfeld erforderlich, da schnell von oben automatisch ein Reifen mit Greifvorrichtung auf Bodenniveau abgesenkt wird. Dieses Sicherheits-Scannerfeld erfordert eine große Hallenfläche und erschwert den Zugang zur jeweiligen Reifenvulkanisiermaschine. Jede Störung muss von Hand quittiert werden und unterbricht die Versorgung von weiteren Reifenvulkanisiermaschinen.

Gemäß einer anderen Ausgestaltung der Handhabungseinrichtungen verlaufen entsprechende Transportschienen als Verfahrbasis für die Ladesysteme und Zuführeinrichtungen oberhalb der Verfahrwege angrenzend an die Reifenvulkanisiermaschinen und Produktionsstationen entsprechend der Schritte zur Reifenherstellung. Die zu vulkanisierenden Reifenrohlinge werden von Handhabungseinrichtungen positioniert, die mit Schwenkarmen und/oder anderweitig positionierbaren Armen, insbesondere Längsauslegern ausgestattet sind. Infolge der gegenüber im Bereich der Hallendecke vorgesehenen Transporteinrichtungen deutlich kürzeren Längsausleger sind Transporteinrichtungen oberhalb der Verfahrwege erheblich steifer und damit das präziser kontrollierbare Handhabungssystem, mit denen eine sehr hohe Genauigkeit erreichbar ist.

Ein häufig erforderlicher Nachbehandlungsprozess nach der Vulkanisation kann durch eine gezielte Abkühlung des restwärmebehafteten Fertigreifens und optional unter einer Innendruckbeaufschlagung erfolgen. Da der restwärmebehafteten Fertigreifen strukturell instabil und sehr empfindlich ist, werden an die Handhabungsvorrichtungen zur Reifenentnahme aus dem Behandlungsraum der Reifenvulkanisiermaschine und an den Transport beziehungsweise da Einlegen in die Nachbehandlungseinrichtung besonders hohe Anforderungen gestellt. Daher werden Handhabungsvorrichtungen mit geeigneten Greifwerkzeugen ausgestattet, die auch die empfindlichen Reifen greifen und aufnehmen können. Greifwerkzeuge dieser Ausbildung sind aufwändig und kostspielig.

Handhabungsvorrichtungen, die wegen ihrer Funktion innerhalb des Reifenherstellungsprozesses und in Bezug auf den Behandlungsraum der Reifenvulkanisiermaschine auch als Belader oder Entlader bezeichnet werden, müssen den handzuhabenden Reifen oder Reifenrohling über Wegstrecken in allen Raumrichtungen bewegen und gegebenenfalls die Reifenorientierung ändern.

Weiterhin müssen Bewegungen und Orientierungsänderungen möglichst schnell durchgeführt werden, um die benötigten Handhabungs- und Transportzeiten gering zu halten und die Gesamtprozesszeit der Reifenherstellung zu minimieren.

Auch können Positionierungsgenauigkeiten mit geringer Lage- und/oder Orientierungsabweichung zum Anforderungsspektrum von Handhabungsvorrichtungen zählen. Diese können beispielsweise bei dem Beladen beziehungsweise Einlegen des Reifenrohlings in die Reifenform, in den Container oder den Behandlungsraum erforderlich sein.

Positionierungspräzision ist auch erforderlich, wenn die restwärmebehafteten Fertigreifen zum Zweck der Nachbehandlung in den Post Cure Inflator oder den Post Cure Device eingelegt werden, beispielsweise um den Fertigreifen mit seiner Reifenwulst lagegenau auf dem Reifenteller abzulegen.

Handhabungsvorrichtungen werden häufig durch eine an einer Basis festgelegten Auskragung gebildet. Die Auskragung ist an einem Ende mit der Basis über ein Gelenk verbunden und weist in der Regel an ihrem anderen Ende ein Greifwerkzeug auf. Die gelenkige Festlegung der Auskragung an der Basis unterstützt eine Verschwenkung relativ zur Basis.

Nachteilig an diesen Konstruktionen ist, dass die realisierbaren Wegstrecken der Greifwerkzeuge durch die Auskragungslänge definiert, festgelegt und erheblich eingeschränkt sind.

Ein weiteres Problem gattungsgemäßer Handhabungsvorrichtungen ist die beschränkte Bewegungskinematik. Werden Bewegungsfreiheitsgrade der greifwerkzeugtragenden Auskragung oder Ausleger durch ein Gelenk realisiert, kann der Ausleger lediglich um diesen Drehpunkt verschwenkt werden. Als Konsequenz ist es den Greifwerkzeugen nur möglich, sich längs eines Kreisbogens zu bewegen.

Durch die vorliegenden Wegstrecken und die auf Kreisbögen festgelegten Bewegungsmuster der Handhabungsvorrichtungen beziehungsweise der Greifwerkzeuge müssen Vorrichtungen dieser Art räumlich benachbart an der Reifenvulkanisiermaschine platziert sein, um mit den Greifwerkzeugen den Behandlungsraum erreichen und die Reifenrohlinge einlegen beziehungsweise die Fertigreifen entnehmen zu können. Üblicherweise kann deshalb die Handhabungsreichweite nicht auf eine zweite oder mehrere Reifenvulkanisiermaschinen erstreckt werden.

Eine weiterhin nachteilige Eigenschaft bekannter Handhabungsvorrichtungen ist, dass für die Handhabungsaufgabe des Beladens und die Handhabungsaufgabe des Entladens vielfach jeweils eine separate Handhabungsvorrichtung vorgesehen werden muss. Häufig ist dafür verantwortlich, dass die Greifwerkzeuge für das Beladen und das Entladen unterschiedlich ausgebildet sind. Auch die üblicherweise zu realisierenden Wegstrecken in diesem Zusammenhang sind dafür vielfach ursächlich.

Konsequenz der separaten Handhabungsvorrichtungen jeweils für das Beladen und das Entladen ist, das für die wenigstens zwei Handhabungsvorrichtungen Handhabungsräume an der Reifenvulkanisiermaschine vorgesehen sein müssen, die üblicherweise in zwei Raumrichtungen angeordnet sind. Dies verursacht einen größeren Platzbedarf insgesamt und macht es erforderlich, dass die jeweiligen Handhabungsräume im Hinblick auf Personengefährdung und Arbeitsschutz gesichert werden müssen.

Aus der DE 39 18 209 A1 ist bereits eine Handhabungsvorrichtung für Reifen bekannt, die einen Ausleger mit einem ersten Auslegerschwerpunkt aufweist. Der Ausleger ist an einer Aufnahme derart festgelegt, dass ein Verschwenken des Auslegers relativ zur Aufnahme unterstützt ist. Der Ausleger besitzt darüber hinaus einen zweiten Auslegerschwerpunkt, sodass ein Greifwerkzeug mit dem Ausleger gekoppelt ist. Darüber hinaus wird ein zweites verschwenkbares Greifwerkzeug verwendet.

In der DE 34 43 947 A1 wird eine weitere Handhabungsvorrichtung für Reifen beschrieben. In der DE 10 2011 011 423 A1 wird eine Handhabungsvorrichtung für Reifen beschrieben, die einen Ausleger mit einem ersten Auslegerschwenkpunkt sowie einem zweiten Auslegerschwenkpunkt aufweist. Es sind sowohl ein erstes Greifwerkzeug als auch ein zweites Greifwerkzeug am Ausleger angeordnet. Die Greifwerkzeuge sind hinsichtlich ihrer Verschwenkbewegungen gekoppelt.

Es ist Aufgabe der Erfindung, eine Handhabungsvorrichtung für Reifen bereitzustellen, welche die genannten Nachteile wenigstens teilweise reduziert und eine kostengünstige Gesamtkonstruktion unterstützt.

Zur Lösung schlägt die erfindungsgemäße Lehre eine Handhabungsvorrichtung gemäß Patentanspruch 1 und ein Verfahren zur Realisierung eines Belade- und Entladezyklusses einer Reifenvulkanisiermaschine mit Reifen gemäß Patentanspruch 14 vor.

Die Erfindung erkennt, dass die Integration von wenigstens zwei Greifwerkzeugen in eine Handhabungsvorrichtung die Möglichkeit eröffnet, sowohl die Beladefunktion als auch die Entladefunktion in und mit einer Handhabungsvorrichtung zu realisieren. Auf diese Weise können die genannten Nachteile bisher verwendeter Handhabungseinrichtungen wenigstens teilweise reduziert werden.

Durch die Kombination des Beladers und Entladers in einer Handhabungsvorrichtung ist weiterhin besonders vorteilhaft, dass nur ein Handhabungsraum für beide Handhabungsaufgaben erforderlich ist. Dadurch ist nicht nur der zu sichernde Handhabungsraum reduziert, sondern auch der insgesamt erforderliche Produktionsraum und/oder beispielsweise die vorzusehende Produktionsfläche innerhalb einer Maschinenhalle.

Wird die erfindungsgemäße Handhabungsvorrichtung in ein vorzugsweise an der Hallendecke und oberhalb der Produktionsmaschinenebene vorgesehenes Transport- und Zuführungsequipment integriert, ist es darüber hinaus möglich, auf einen arbeits- und personentechnisch zu sichernden Handhabungsraum gänzlich zu verzichten, da sich dieser dann über- und außerhalb der Reichweite von Personen befindet.

Neben der eigentlichen Raum- und/oder Flächenreduzierung dem Betrage nach ist ein weiterer ganz erheblicher Vorteil die Integration beider Handhabungsfunktionen in einen Handhabungsraum. Dadurch ist es möglich, die Handhabungsfunktionen aus genau einer Raumrichtung relativ zur Reifenvulkanisiermaschine zu realisieren.

Durch die erfindungsgemäße Handhabungsvorrichtung ist zusätzlich ein signifikanter Geschwindigkeitsvorteil unterstützt. Der Geschwindigkeitsgewinn und damit einhergehend eine Reduzierung der insgesamt erforderlichen Handhabungszeit kann die Reifenproduktionszeit absenken und damit die Ausbringung und Wirtschaftlichkeit der Anlage erhöhen. Die dafür ursächliche funktionelle Eigenschaft der erfindungsgemäßen Lehre ist die wenigstens teilweise, quasi doppelte Nutzung zumindest eines Teilweges der Schwenkbewegung sowohl für die Beladungshandhabung als auch die Entladungshandhabung. Die realisierbaren Zeiteinsparungen betragen etwa 10% im Vergleich zur Verwendung separater Belader und Entlader.

Die konstruktive Realisierung der erfindungsgemäßen Handhabungsvorrichtung sieht wenigstens einen ersten Ausleger mit einem ersten Auslegerschwenkpunkt vor. Der erste Auslegerschwenkpunkt bildet die Kopplungsstelle zu einer Aufnahme, die als Basis der Handhabungsvorrichtung fungieren kann und optional beispielsweise durch einen Schlitten ergänzt in einer Raumrichtung verfahrbar ist. Auf diese Weise wird ein vorzugsweise linearer Freiheitsgrad geschaffen, der die Möglichkeit es Anfahrens von Arbeitspunkten in unterschiedlichen Arbeitsebenen beziehungsweise Raumhöhenniveaus unterstützt.

Der lineare Freiheitsgrad kann alternativ oder additiv auch in anderen Komponenten der Handhabungsvorrichtung realisiert sein.

Der Ausleger verfügt weiterhin über einen zweiten Auslegerschwenkpunkt, der die Kopplungsstelle bildet zu den wenigstens zwei Greifwerkzeugen. Der Freiheitsgrad des zweiten Auslegerschwenkpunktes kann linearer Natur sein, ist aber vorzugsweise rotativer Art. Wird der der zweite Auslegerschwenkpunkt mit einem Rotationsfreiheitsgrad ausgestattet ist es möglich, die Rotationsachse entweder
a) parallel oder in Verlängerung der Auslegermittenachse oder
b) in einer beliebigen zur Auslegermittenachse nichtparallelen Achse anzuordnen.

Es ist darüber hinaus möglich und in einer weiteren Ausführungsvariante vorgesehen
c) den Bewegungsfreiheitsgrad auf eine Mehrzahl von Raum- und/oder Rotationsrichtungen auszudehnen und auf diese Weise einen mehrdirektionalen Freiheitsgrad zu unterstützen.

Beispielsweise lassen sich die Bewegungsfreiheitsgrade gemäß der Ausführungsformen a) und b) durch ein in geeigneter Weise angeordnetes Dreh- oder Kardangelenk bewerkstelligen, die Realisierung im Rahmen eines mehrdirektionalen Freiheitsgrades ist beispielsweise durch Kugelgelenke möglich.

Die Anordnung der wenigstens zwei Greifwerkzeuge kann in Abhängigkeit des realisieren Freiheitsgrad-Typs des zweiten Auslegerschwenkpunktes unterschiedlich erfolgen:
Zum einen ist es bei Freiheitsgraden gemäß a) und/oder b) möglich, die Greifwerkzeuge als Sandwich anzuordnen. Vorteilhaft ist hierbei die raumsparende Anordnung. Zum anderen können die wenigstens zwei Greifwerkzeuge an wenigstens einem Werkzeugarm festgelegt sein, der mit dem zweiten Auslegerschwenkpunkt des Auslegers gekoppelt ist.

Es ist eine weitere Ausgestaltung der erfindungsgemäßen Handhabungsvorrichtung mit vier Greifwerkzeugen denkbar die geeignet ist, Belade- und Entladehandhabungsaufgaben für zwei benachbart angeordnete Reifenvulkanisiermaschinen auszuführen.

Die Ausführungsvariante der wenigstens zwei Greifwerkzeuge festgelegt endseitig an einem Werkzeugarm ist in den Figuren dargestellt. Es zeigen:
- Figur 1: die Draufsicht auf eine schematische Darstellung der Handhabungsvorrichtung (30) und
- Figur 2: die Draufsicht auf einen schematisch dargestellten Bereich einer Reifenherstellungsanlage mit einer Reifenvulkanisiermaschine (100), einer Handhabungsvorrichtung (30) und einer Transporteinrichtung (60) sowie
- Figur 3: die Draufsicht auf einen schematisch dargestellten Bereich einer Reifenherstellungsanlage mit zwei Reifenvulkanisiermaschinen (100), zwei Handhabungsvorrichtungen (30) und zwei Transporteinrichtungen (60).

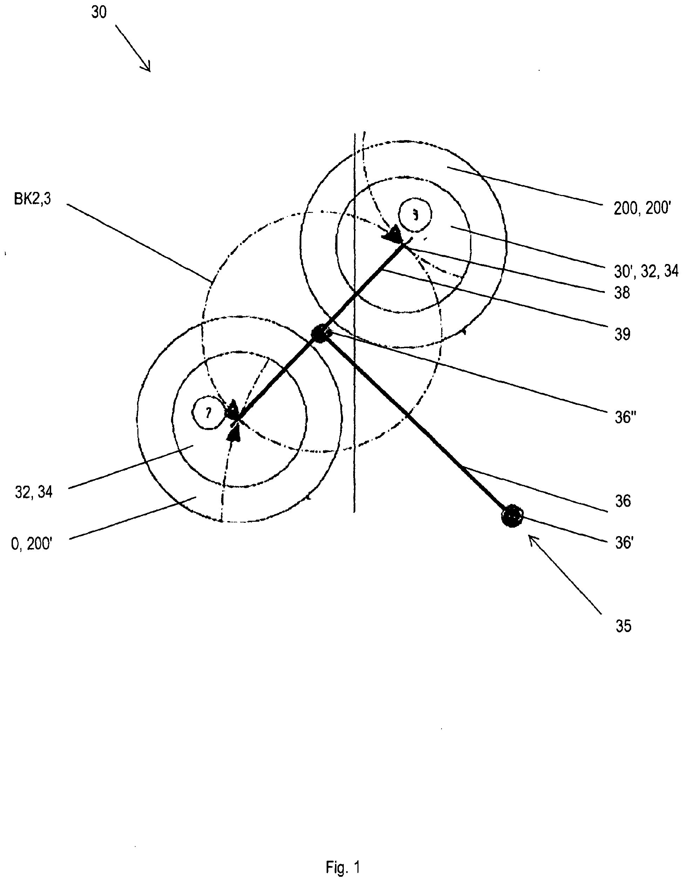

Figur 1 zeigt die Draufsicht auf eine schematische Darstellung der Handhabungsvorrichtung (30) in einer stark vereinfachten Prinzipskizze. Der wenigstens eine Ausleger (36) ist über einen ersten Auslegerschwenkpunkt (36') mit einer Aufnahme (35) gekoppelt beziehungsweise stützt sich dort ab. Die Aufnahme (35) kann als Basis (35') gestaltet sein und über einen vorzugsweise linearen Freiheitsgrad verfügen, sodass unterschiedliche Arbeitsebenen anfahrbar sind. Beispielsweise kann ein Schlitten (35") den linearen Freiheitsgrad bereitstellen - Schlitten (35") und Basis (35') sind nicht dargestellt.

Der endseitig des Auslegers (36) vorgesehene erste Auslegerschwenkpunkt (36') unterstützt vorzugsweise eine Schwenkbewegung um eine vertikale Achse und ermöglicht so das Schwenken des Auslegers (36) in einer horizontalen Ebene. Die Schwenk-Bewegungskinematik zentrisch zum ersten Auslegerschwenkpunkt (36') gehorcht vorzugsweise einer Kreisbogenform und kann Schwenkwege dem Betrag nach von bis zu 360 Grad realisieren. Häufig ist jedoch aufgrund der Raumverhältnisse angrenzend einer Reifenvulkanisiermaschine (100) der Verschwenkweg auf 90 bis 180 Grad beschränkt.

Der gegenüber des ersten Auslegerschwenkpunktes (36') und vorzugsweise ebenfalls endseitig vorgesehene zweite Auslegerschwenkpunkt (36") koppelt mit einem Bewegungsfreiheitsgrad die wenigstens zwei Greifwerkzeuge (30') mit dem Ausleger (36). Der zweite Auslegerschwenkpunkt (36") ist vorzugsweise analog zum ersten Auslegerschwenkpunkt (36') ausgebildet und unterstützt vorzugsweise eine Schwenkbewegung ebenfalls um eine vertikale Achse, sodass ein Schwenken der wenigstens zwei Greifwerkzeuge (30') relativ zum Ausleger (36) in einer horizontalen Ebene realisierbar ist.

Die wenigstens zwei Greifwerkzeuge (30') können jeweils endseitig an einem Werkzeugarm (39) angeordnet sein - in diesem Fall ist der Werkzeugarm (39) den Greifwerkzeugen (30') und der Kopplungsstelle in Form des zweiten Auslegerschwenkpunktes (36") praktisch zwischengeschaltet. Im in Figur 1 gezeigten Ausführungsbeispiel ist die Realisierung symmetrisch ausgebildet, es können aber auch andere, insbesondere durch Wahl der Kopplungsstelle außermittig des Werkzeugarms (39) asymmetrische Situationen geschaffen werden. Die gezeigte symmetrische Ausgestaltung ist vorteilhaft, da ohne Korrekturschwenkbewegungen des Auslegers (36) exakt ein Arbeitspunkt (300) mit beiden Greifwerkzeugen (30`) anfahrbar ist.

Die Schwenk-Bewegungskinematik BK2,3 der wenigstens zwei Greifwerkzeuge (30') relativ zum Ausleger (36) um den zweiten Auslegerschwenkpunkt (36") ist kreisbahnförmig und kann Schwenkwege dem Betrag nach von bis zu 360 Grad realisieren. Bei der gezeigten symmetrischen Ausbildung sind die Kreisbogenbahnen der Greifwerkzeuge (30') sowohl konzentrisch als auch kongruent. Im Fall einer asymmetrischen Realisierung sind die Kreisbahnbewegungen der Greifwerkzeuge (30') auch konzentrisch, die Kreisbahndurchmesser differieren jedoch gemäß dem Mittenversatz des zweiten Auslegerschwenkpunktes (36") zum Werkzeugarm (39).

Die Greifwerkzeuge (30') sind vorzugsweise mittels jeweils einer Greifwerkzeugaufnahme (38) mit dem Werkzeugarm (39) gekoppelt. Es kann vorgesehen sein, dass auch die Greifwerkzeugaufnahmen (38) einen Bewegungsfreiheitsgrad unterstützen. Vorzugsweise ist dieser Bewegungsfreiheitsgrad in Ausbildung und räumlicher Ausrichtung gleich dem des zweiten Auslegerschwenkpunktes (36").

Die Greifwerkzeuge (30') können konstruktiv gleich und derart ausgebildet sein, dass Handlings- und Greifaufgaben sowohl für Reifenrohlinge (200') als auch für Fertigreifen (200) durchführbar sind.

Eine erfindungsgemäße Variante der Handhabungsvorrichtung (30) sieht vor, dass die Greifwerkzeuge (30') auf die Handhabungsaufgaben für Reifenrohlinge (200') und für Fertigreifen (200) abgestimmt sind, da die mechanischen Eigenschaften und die Empfindlichkeit von Reifenrohlingen (200') und Fertigreifen (200) erheblich differiert.

Aus Sicht der Reifenvulkanisiermaschine (100) mit seinem Kernelement gebildet aus dem Behandlungsraum (110) wird dieser mit Reifenrohlingen (200') beladen und nach der Reifenvulkanisation Fertigreifen (200) entladen. Gemäß dieser Nomenklatur spricht man von Beladergreifwerkzeugen (34) und Entladergreifwerkzeugen (32).

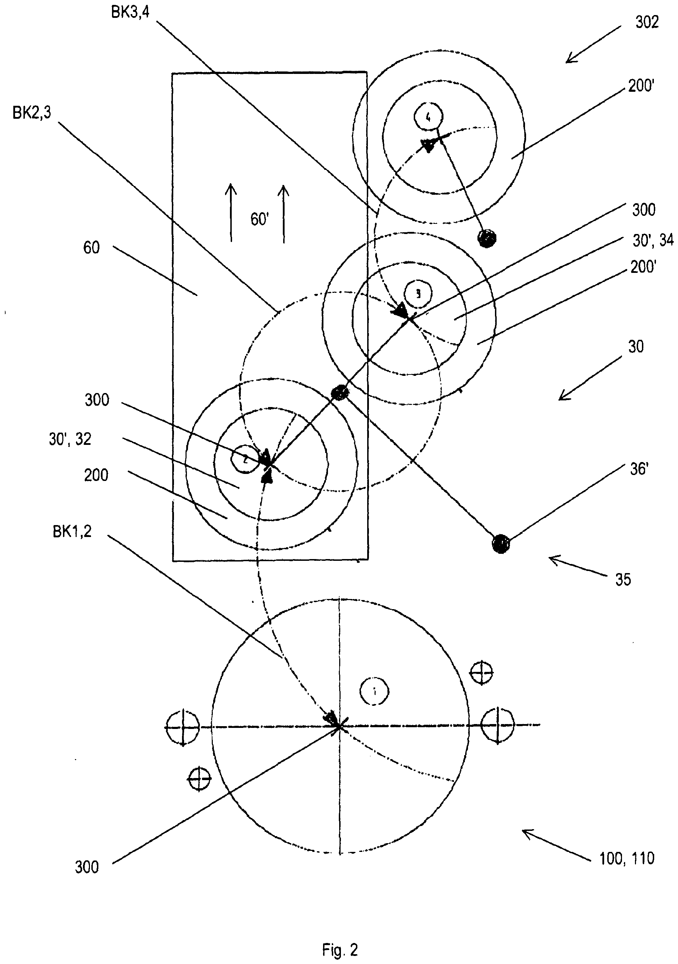

Figur 2 umfasst die Draufsicht auf einen schematisch dargestellten Bereich einer Reifenherstellungsanlage mit einer Reifenvulkanisiermaschine (100), einer Handhabungsvorrichtung (30) und einer Transporteinrichtung (60) prinzipskizzenhaft.

Die Handhabungsvorrichtung (30) ist relativ zur Reifenvulkanisiermaschine (100) in einer Raumrichtung angeordnet und auf diese Weise in der Lage, alle Handhabungsfunktionen in Form von Beladen und Entladen aus einer Richtung der Reifenvulkanisiermaschine (100) zu besorgen.

Besonders bevorzugt ist die rückseitig der Reifenvulkanisiermaschine (100) angeordnete Handhabungsvorrichtung (30), sodass die Zugänglichkeit der Vorderseite uneingeschränkt unterstützt ist. Additiver oder alternativer Vorteil dieser relativen Anordnung von Reifenvulkanisiermaschine (100) und Handhabungsvorrichtung (30) relativ zueinander und/oder der Integration aller Handhabungsfunktionen in einer Handhabungsvorrichtung (30) ist auch, dass nur ein Handhabungsraum erforderlich ist. Da Handhabungsräume überwiegend mit Personenschutzmaßnahmen abgesichert werden müssen, reduziert die Erfindung diesen Aufwand. Im gezeigten Ausführungsbeispiel der Figur 2 ist dieser Aufwand folglich zumindest halbiert.

Um die verschiedenen Arbeitspunkte (300) des Behandlungsraumes (110) der Reifenvulkanisiermaschine (100), der Transporteinrichtung (60) und des Rohlingsstandes beziehungsweise Magazins (302) anfahren zu können, schwenkt der Ausleger (36) um den ersten Auslegerschwenkpunkt (36') und/oder schwenkt der Werkzeugarm (39) um den zweiten Auslegerschwenkpunkt (36"), sodass die jeweiligen Greifwerkzeuge (30') in die erforderlichen Positionen beziehungsweise Arbeitspunkte (300) positionierbar sind. Die Schwenkbewegungen um die beiden Auslegerschwenkpunkte (36', 36") können sequentiell und/oder wenigstens teilweise parallel erfolgen.

Der Ablauf der Handhabungsfunktionen zum Beladen und Entladen sowie Zutransport und Abtransport werden wie folgt funktionell realisiert:
Von dem (nicht dargestellten) weiteren Handlingsequipment wird ein Reifenrohling (200') in dem Rohlingsstand (302) in der Position 4 abgelegt. Der Rohlingsstand (302) schwenkt den Reifenrohling (200') von Position 4 nach Position 3 durch Realisierung einer Zuführbewegung BK3,4. Die Position 3 ist derjenige Arbeitspunkt (300), der sowohl von dem Rohlingsstand (302) als auch der Handhabungsvorrichtung (30) anfahrbar ist.

Die Handhabungsvorrichtung (30) verschwenkt vorzugsweise in einem zu Position 3 und/oder Position 4 abweichenden Raumebenenniveau derart, dass ein Greifwerkzeug (30', 34) in eine kongruente Parallelebene des Arbeitspunktes (300) von Position 3 verfahren wird. Ist diese Positionierung abgeschlossen, verfährt die Handhabungsvorrichtung (30) vorzugsweise durch Linearbewegung in das Raumebenenniveau von Position 4. Die Linearbewegung wird ermöglicht durch den Freiheitsgrad von der als Basis (35') gestalteten Aufnahme (35) mit einem Schlitten (35"). Auch in Figur 2 sind Schlitten (35") und Basis (35') nicht dargestellt.

Das Greifwerkzeug (30', 34) greift im Arbeitspunkt (300) von Position 3 den durch den Rohlingsstand (302) angebotenen Reifenrohling (200'). Anschließend schwenkt der dann leere Rohlingsstand (302) von Position 3 zurück nach Position 4 entlang der Zuführbewegung BK3,4. Der Rohlingsstand (302) ist nach Erreichen der Position 4 bereit zur erneuten Beschickung mit einem Reifenrohling (200') durch das weitere Handlingsequipment.

Im nächsten Handhabungsschritt verfährt die Handhabungsvorrichtung (30) mit ergriffenem Reifenrohling (200') von dem Raumebenenniveau der Position 4 in das Raumebenenniveau von Position 1. Der Anfahrpunkt (300) in Position 1 entspricht der Arbeitsebene des Behandlungsraumes (110) der Reifenvulkanisiermaschine (100).

Befindet sich die Reifenvulkanisiermaschine (100) in einem Handhabungszustand dadurch, dass der Behandlungsraum (110) geöffnet ist, schwenkt die Handhabungsvorrichtung (30) auf Raumhöhenniveau der Arbeitsebene (300) des Behandlungsraumes (110) mit dem Greifwerkzeug (30' 32) von Position 2 in Position 1. Die Schwenkbewegung ist vorzugsweise eine Kreisbogenkinematik entlang des Weges BK1,2.

In der Position 1 greift das Greifwerkzeug (30, 32) den restwärmebehafteten Fertigreifen (200) und schwenkt anschließend von Position 1 in Position 2. Ist Position 2 erreicht, wird der Fertigreifen (200) auf einer Transporteinrichtung (60) abgelegt, welche für den Abtransport des Reifens (200) entlang einer Transportbewegungsrichtung (60') vorgesehen ist.

Nach dem Ablegen des Fertigreifens (200) auf die Transporteinrichtung (60) und situationsbedingtem Lagezustand der Handhabungsvorrichtung (30) wie in Figur 2 illustriert, wird das Greifwerkzeug (30', 34) mit gegriffenem Reifenrohling (200') entlang des Verschwenkweges BK2,3 von Position 3 nach Position 2 verbracht. Die Bewegungskinematik BK2,3 ist hier kreisbogenförmig und weist einen Verschwenkweg auf, der in etwa einem Bogenmaßbetrag 180 Grad entspricht.

Das Greifwerkzeug (30', 34) mit gegriffenem Reifenrohling (200') wird von Position 2 entlang des Verschwenkweges BK1,2 nach Position 1 und damit in den Arbeitspunkt (300) des Behandlungsraumes (110) der Reifenvulkanisiermaschine (100) verschwenkt. Das Greifwerkzeug (30', 34) legt den Reifenrohling (200') anschließend in Position 1 ab und schwenkt danach entlang des Verschwenkweges BK1,2 von Position 1 in Position 2.

Der anschließende letzte Handhabungsschritt eines vollständigen Belade- und Entladezyklusses ist die Realisierung des kreisbogenförmigen Verschwenkweges BK2,3 im Rahmen des Bogenmaßbetrages PI, sodass die in Figur 2 gezeigte Lage- und Positionsanordnung vorliegt, jedoch mit leeren Greifwerkzeugen (30', 32, 34) ohne Reifen (200, 200').

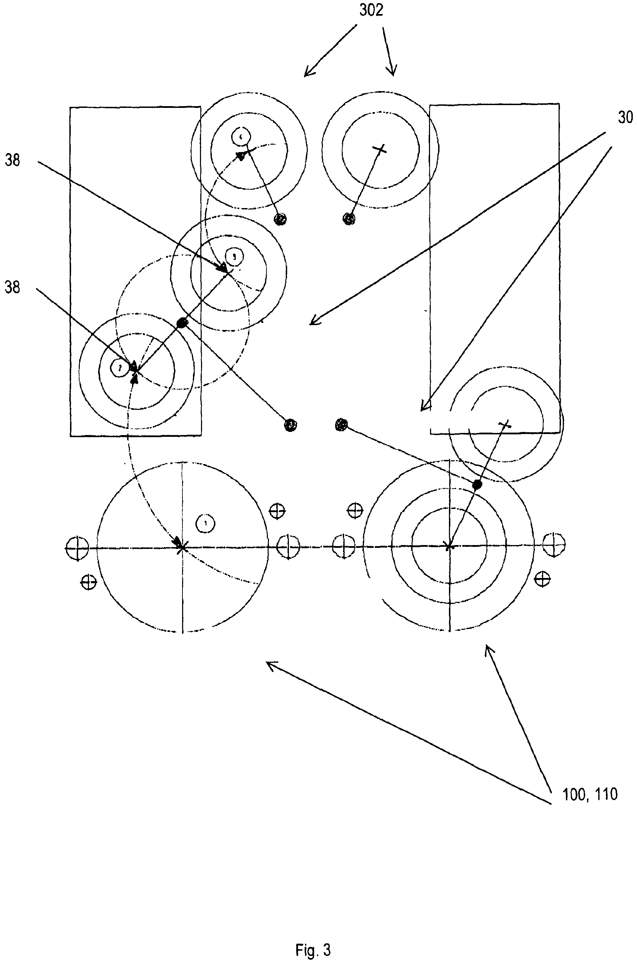

Figur 3 verdeutlicht anhand einer Draufsichtskizze umfassend einen schematisch dargestellten Bereich einer Reifenherstellungsanlage mit zwei Reifenvulkanisiermaschinen (100), zwei Handhabungsvorrichtungen (30) und zwei Transporteinrichtungen (60) weitere Einsatzmöglichkeiten und Ausgestaltungen der Erfindung.

Figur 3 zeigt praktisch die duplizierte Situation gemäß Figur 2, das heißt jeweils eine Handhabungsvorrichtung (30) für alle erforderlichen Belade- und Entlade-Handhabungsfunktionen ist jeweils einer Reifenvulkanisiermaschine (100) zugeordnet und realisiert die Handhabungsfunktionen von einer Seite, vorzugsweise der Rückseite der Reifenvulkanisiermaschine (100) aus.

Die Erfindung erkennt aber auch, dass unter geeigneten Voraussetzungen eine vorzugsweise zentrisch und symmetrisch zu den Reifenvulkanisiermaschinen (100) angeordnete Handhabungsvorrichtung (30) alle genannten Handhabungsfunktionen für beide Reifenvulkanisiermaschinen (100) vereinigen kann.

Die Voraussetzungen sind vorliegend, wenn
- die Reifenvulkanisations-Zykluszeit innerhalb der Reifenvulkanisationsmaschinen (100) sowohl identisch als auch zueinander zeitversetzt ist und
- der Handhabungszeitbedarf für einen vollständigen Handhabungszyklus zumindest nicht wesentlich über dem der Reifenvulkanisationszeit der Reifenvulkanisationsmaschinen (100) liegt.

Wird eine Handhabungsvorrichtung (30) mit zwei Greifwerkzeugen (30', 32, 34) eingesetzt, ist darüber hinaus Voraussetzung, dass
- in beiden Reifenvulkanisiermaschinen (100) Reifendimensionen verarbeitet werden, die mit den Greifwerkzeugen (30', 32, 34) gegriffen werden können.

Im Fall einer Handhabungsvorrichtung (30) für zwei Reifenheizpressen (100) sieht die Erfindung eine Verschwenkkapazität des wenigstens einen Auslegers (36) um den ersten Auslegerschwenkpunkt (36') von vorzugsweise 1 ¾ von 180 Grad vor.

Sollen erheblich unterschiedliche Reifendimensionen in den beiden Reifenvulkanisiermaschinen verarbeitet werden, sieht die Erfindung eine Handhabungsvorrichtung (30) für alle Handhabungsaufgaben beider Reifenvulkanisiermaschinen (100) vor, die über vier Greifwerkzeuge (30', 32, 34) mit paarweise auf die unterschiedlichen Reifendimensionen angepassten Greifmaulweiten vor. Zur Positionierung der jeweiligen Greifwerkzeuge (30', 32, 34) für unterschiedlich Reifendimensionen wird erfindungsgemäß in den Greifwerkzeugaufnahmen (38) durch ein Drehgelenk ein weiterer rotativer Freiheitsgrad eingebracht, der die als Sandwich und somit paarweise angeordneten Greifwerkzeuge (30', 32, 34) zwischen den Handhabungszyklen für jede Reifenvulkanisiermaschine (100) in deren Arbeitsebene verschwenkt.

## Patentansprüche

1. Handhabungsvorrichtung (30) für Reifen (200, 200'), aufweisend wenigstens einen Ausleger (36), wobei der wenigstens eine Ausleger (36) mit einem ersten Auslegerschwenkpunkt (36') an einer Aufnahme (35) derart festgelegt ist, dass ein Verschwenken des wenigstens einen Auslegers (36) relativ zur Aufnahme (35) unterstützt ist und dass der wenigstens eine Ausleger (36) einen zweiten Auslegerschwenkpunkt (36") aufweist, sodass wenigstens ein Greifwerkzeug (30', 32, 34) mit dem wenigstens einen Ausleger (36) gekoppelt ist sowie bei der wenigstens ein zweites Greifwerkzeug (30', 32, 34) mit dem zweiten Auslegerschwenkpunkt (36") gekoppelt ist und dass die wenigstens zwei Greifwerkzeuge (30', 32, 34) relativ zu wenigstens einem Auslegerschwenkpunkt (36', 36") schwenkbar sind, wobei die Kopplung der wenigstens zwei Greifwerkzeuge (30', 32, 34) mit dem zweiten Auslegerschwenkpunkt (36") einen Werkzeugarm (39) umfasst, wobei die wenigstens zwei Greifwerkzeuge (30', 32, 34) über jeweils eine Greifwerkzeugaufnahme (38) gekoppelt sind und wobei die Kopplung der Greifwerkzeuge (30', 32, 34) derart erfolgt, dass ein Verschwenken entlang einer Bewegungskinematik BK 2,3 wenigstens eines Greifwerkzeugs (30', 32, 34) unterstützt ist, **dadurch gekennzeichnet, dass** die Bewegungskinematiken BK 2,3 der wenigstens zwei Greifwerkzeuge (30', 32, 34) konzentrisch zueinander oder kongruent sind.

2. Handhabungsvorrichtung (30) für Reifen (200, 200') nach Anspruch 1, **dadurch gekennzeichnet, dass** die Bewegungskinematik BK 2,3 kreisbogenförmig ist.

3. Handhabungsvorrichtung (30) für Reifen (200, 200') nach Anspruch 2, **dadurch gekennzeichnet, dass** durch die Bewegungskinematik BK2,3 eine Bewegungsstrecke realisierbar ist, die dem Bogenmaß von bis zu 360 Grad entspricht.

4. Handhabungsvorrichtung (30) für Reifen (200, 200') nach Anspruch 1, **dadurch gekennzeichnet, dass** die Handhabungsvorrichtung (30) wenigstens einen zur Schwenkebene nichtparallelen linearen Freiheitsgrad aufweist, sodass die Greifwerkzeuge (30', 32, 34) in unterschiedliche Raumhöhenniveaus verfahrbar sind.

5. Handhabungsvorrichtung (30) für Reifen (200, 200') nach Anspruch 4, **dadurch gekennzeichnet, dass** der wenigstens eine lineare Freiheitsgrad durch die Aufnahme (35) und/oder einen Auslegerschwenkpunkt (36', 36") und/oder eine Greifwerkzeugaufnahme (38) und/oder wenigsten ein Greifwerkzeug (30', 32, 34) unterstützt ist.

6. Handhabungsvorrichtung (30) für Reifen (200, 200') nach Anspruch 1, **dadurch gekennzeichnet, dass** die wenigstens zwei Greifwerkzeuge (30', 32, 34) derart mit dem zweiten Auslegerschwenkpunkt (36") gekoppelt sind, dass Belade- und Entladehandhabungsfunktionen durch die Handhabungsvorrichtung (30) für wenigstens eine Reifenvulkanisiermaschine (100) realisierbar sind.

7. Handhabungsvorrichtung (30) für Reifen (200, 200') nach Anspruch 1, **dadurch gekennzeichnet, dass** die Längendimensionierung des Auslegers (36) und/oder dessen Schwenkwegkapazität einen Handhabungsraum unterstützt, der Arbeitspunkte in der Reifenvulkanisiermaschine (100) und einer Transporteinrichtung (60) und einem Rohlingsstand (302) umfasst.

8. Handhabungsvorrichtung (30) für Reifen (200, 200') nach Anspruch 1, **dadurch gekennzeichnet, dass** die Größendimensionierung der Handhabungsvorrichtung (30) Schwenkbewegungen der wenigstens zwei Greifwerkzeuge (30', 32, 34) zwischen den Positionen 1, 2 und 3 unterstützt.

9. Handhabungsvorrichtung (30) für Reifen (200, 200') nach Anspruch 1, **dadurch gekennzeichnet, dass** die Schwenkbewegungen entlang einer Bewegungskinematik BK 1,2 und/oder der Bewegungskinematik BK 2,3 erfolgen.

10. Handhabungsvorrichtung (30) für Reifen (200, 200') nach Anspruch 1, **dadurch gekennzeichnet, dass** vier Greifwerkzeuge (30', 32, 34) mit dem zweiten Auslegerschwenkpunkt (36") gekoppelt sind.

11. Handhabungsvorrichtung (30) für Reifen (200, 200') nach Anspruch 10, **dadurch gekennzeichnet, dass** jeweils zwei Greifwerkzeuge (30', 32, 34) paarweise als Sandwich angeordnet sind.

12. Handhabungsvorrichtung (30) für Reifen (200, 200') nach Anspruch 1, **dadurch gekennzeichnet, dass** wenigstens ein Greifwerkzeug (30') als Entlader-Greifwerkzeug (32) mit Greifeigenschaften optimiert für Fertigreifen (200) ausgebildet ist.

13. Handhabungsvorrichtung (30) für Reifen (200, 200') nach Anspruch 1, **dadurch gekennzeichnet, dass** wenigstens ein Greifwerkzeug (30') als Belader-Greifwerkzeug (34) mit Greifeigenschaften optimiert für Reifenrohlinge (200') ausgebildet ist.

14. Verfahren zur Realisierung eines Belade- und Entladezyklusses einer Reifenvulkanisiermaschine (100) mit Reifen (200, 200') mit einer Handhabungsvorrichtung (30) nach einem der vorgehenden Ansprüche aufweisend die Handhabungsschritte
i. Positionierung eines ersten Greifwerkzeuges (30', 34) in Position einer 3,
ii. Greifen eines zuvor bereitgelegten Reifenrohlings (200') mit dem in Position 3 positionierten ersten Greifwerkzeug (30', 34),
iii. Verschwenken der Handhabungsvorrichtung (30) um einen ersten Auslegerschwenkpunkt (36'), sodass ein zweiten Greifwerkzeug (30', 32) von einer Position 2 nach einer Position 1 verschwenkt wird,
iv. Greifen des Fertigreifens (200) im Behandlungsraum (110) der Reifenvulkanisiermaschine (100),
v. Verschwenken der Handhabungsvorrichtung (30) um den ersten Auslegerschwenkpunkt (36'), sodass das zweite Greifwerkzeug (30', 32) mit dem gegriffenen Fertigreifen (200) von Position 1 nach Position 2 verschwenkt wird,
vi. Ablegen des Fertigreifens (200) auf einer Transporteinrichtung (60),
vii. Verschwenken zumindest eines der Greifwerkzeuge (30', 32, 34) um den zweiten Auslegerschwenkpunkt (36") zwischen Position 2 und Position 3, sodass der gegriffene Reifenrohling (200') in Position 2 positioniert wird,
viii. Verschwenken der Handhabungsvorrichtung (30) um den ersten Auslegerschwenkpunkt (36'), sodass das erste Greifwerkzeug (30', 34) mit dem gegriffenen Reifenrohling (200') von Position 2 nach Position 1 verschwenkt wird,
ix. Ablegen des Reifenrohlings (200') in den Behandlungsraum (110) der Reifenvulkanisiermaschine (100),
x. Verschwenken der Handhabungsvorrichtung (30) um den ersten Auslegerschwenkpunkt (36'), sodass das erste Greifwerkzeug (30', 34) von Position 1 nach Position 2 verschwenkt wird.

15. Verfahren zur Realisierung eines Belade- und Entladezyklusses einer Reifenvulkanisiermaschine (100) mit Reifen (200, 200') nach Anspruch 14 **gekennzeichnet durch** einen weiteren Handhabungsschritt
xi. Verschwenken zumindest eines der Greifwerkzeuge (30', 32, 34) um den zweiten Auslegerschwenkpunkt (36") zwischen Position 2 und Position 3, sodass der gegriffene Reifenrohling (200') in Position 2 positioniert wird.

16. Verfahren zur Realisierung eines Belade- und Entladezyklusses einer Reifenvulkanisiermaschine (100) mit Reifen (200, 200') nach Anspruch 14, **dadurch gekennzeichnet, dass** die Verfahrensschritte i. und/oder iii. und/oder v. und/oder vii. und/oder viii. und/oder x. innerhalb eines Raumhöhenniveaus abweichend von einem Raumhöhenniveau der Verfahrensschritte ii. und/oder iv. und/oder vi. und/oder ix. durchgeführt werden.

17. Verfahren zur Realisierung eines Belade- und Entladezyklusses einer Reifenvulkanisiermaschine (100) mit Reifen (200, 200') nach Anspruch 14, **dadurch gekennzeichnet, dass** der Verfahrensschritt iii. und/oder v. und/oder viii. und/oder x. entlang der Bewegungskinematik BK 1,2 erfolgt.

18. Verfahren zur Realisierung eines Belade- und Entladezyklusses einer Reifenvulkanisiermaschine (100) mit Reifen (200, 200') nach Anspruch 14 oder 15, **dadurch gekennzeichnet, dass** der Verfahrensschritt vii. und/oder xi. entlang der Bewegungskinematik BK 2,3 erfolgt.

19. Produktionsanlage zur Herstellung von Reifen aufweisend wenigstens eine Reifenvulkanisiermaschine (100) und wenigstens eine Transporteinrichtung (60) und wenigstens einen Rohlingsstand (203) und wenigstens eine Handhabungsvorrichtung (30) nach einem der Ansprüche 1 bis 13.

## Claims

1. Handling device (30) for tires (200, 200'), comprising at least one extension arm (36), wherein the at least one extension arm (36) is fixed with a first extension arm pivot point (36') to a receptacle (35) in such a way that pivoting of the at least one extension arm (36) relative to the receptacle (35) is supported and that the at least one extension arm (36) has a second extension arm pivot point (36"), so that at least one gripping tool (30', 32, 34) is coupled to the at least one extension arm (36) and at least one second gripping tool (30', 32, 34) is coupled to the second extension arm pivot point (36"), and in that the at least two gripping tools (30', 32, 34) are pivotable relative to at least one extension arm pivot point (36', 36"), wherein the coupling of the at least two gripping tools (30', 32, 34) to the second extension arm pivot point (36") comprises a tool arm (39), wherein the at least two gripping tools (30', 32, 34) are each coupled via a gripping tool receptacle (38) and wherein the coupling of the gripping tools (30', 32, 34) is effected in such a way that a pivoting along a movement kinematics BK 2,3 of at least one gripping tool (30', 32, 34) is supported, **characterized in that** the movement kinematics BK 2,3 of the at least two gripping tools (30', 32, 34) are concentric relative to each other or congruent.

2. Handling device (30) for tires (200, 200') according to claim 1, **characterized in that** the movement kinematics BK 2,3 is arc-shaped.

3. Handling device (30) for tires (200, 200') according to claim 2, **characterized in that** the movement kinematics BK 2,3 can be used to implement a movement path which corresponds to the radian measure of up to 360 degrees.

4. Handling device (30) for tires (200, 200') according to claim 1, **characterized in that** the handling device (30) has at least one linear degree of freedom which is not parallel to the swivel plane, so that the gripping tools (30', 32, 34) can be moved to different spatial height levels.

5. Handling device (30) for tires (200, 200') according to claim 4, **characterized in that** the at least one linear degree of freedom is supported by the receptacle (35) and/or an extension arm pivot point (36', 36") and/or a gripping tool (38).

6. Handling device (30) for tires (200, 200') according to claim 1, **characterized in that** the at least two gripping tools (30', 32, 34) are coupled to the second extension arm pivot point (36") in such a way that loading and unloading handling functions can be implemented by the handling device (30) for at least one tire vulcanizing machine (100).

7. Handling device (30) for tires (200, 200') according to claim 1, **characterized in that** the length dimensioning of the extension arm (36) and/or its swivel path capacity supports a handling space which comprises working points in the tire vulcanizing machine (100) and a transport device (60) and a raw material stand (302).

8. Handling device (30) for tires (200, 200') according to claim 1, **characterized in that** the dimensioning of the size of the handling device (30) supports pivoting movements of the at least two gripping tools (30', 32, 34) between the positions 1, 2 and 3.

9. Handling device (30) for tires (200, 200') according to claim 1, **characterized in that** the pivoting movements take place along a movement kinematics BK 1,2 and/or the movement kinematics BK 2,3.

10. Handling device (30) for tires (200, 200') according to claim 1, **characterized in that** four gripping tools (30', 32, 34) are coupled to the second extension arm pivot point (36").

11. Handling device (30) for tires (200, 200') according to claim 10, **characterized in that** each two gripping tools (30', 32, 34) are arranged in pairs as a sandwich.

12. Handling device (30) for tires (200, 200') according to claim 1, **characterized in that** at least one gripping tool (30') is used as an unloading gripping tool (32) with gripping properties optimized for finished tires (200).

13. Handling device (30) for tires (200, 200') according to claim 1, **characterized in that** at least one gripping tool (30') is used as a loader gripping tool (34) with gripping properties optimized for tire blanks (200').

14. Method for realizing a loading and unloading cycle of a tire vulcanizing machine (100) with tires (200, 200') with a handling device (30) according to one of the preceding claims, comprising the handling steps
i. Positioning of a first gripping tool (30', 34) in a position 3,
ii. Gripping of a previously prepared tire blank (200') with the first gripping tool (30', 34) positioned in position 3,
iii. Pivoting the handling device (30) about a first extension arm pivot point (36'), so that a second gripping tool (30', 32) is pivoted from a position 2 to a position 1,
iv. Gripping the finished tire (200) in the treatment chamber (110) of the tire vulcanizing machine (100),
v. Pivoting the handling device (30) about the first extension arm pivot point (36'), so that the second gripping tool (30', 32) with the gripped finished tire (200) is pivoted from position 1 to position 2,
vi. Placing the finished tire (200) on a transport device (60),
vii. Pivoting at least one of the gripping tools (30', 32, 34) about the second extension arm pivot point (36") between position 2 and position 3, so that the gripped tire blank (200') is positioned in position 2,
viii. Pivoting the handling device (30) about the first extension arm pivot point (36'), so that the first gripping tool (30', 34) with the gripped tire blank (200') is pivoted from position 2 to position 1,
ix. Placing the tire blank (200') into the treatment chamber (110) of the tire vulcanizing machine (100),
x. Pivoting the handling device (30) about the first extension arm pivot point (36'), so that the first gripping tool (30', 34) is pivoted from position 1 to position 2.

15. Method for the realization of a loading and unloading cycle of a tire vulcanizing machine (100) with tires (200, 200') according to claim 14 **characterized by** a further handling step
xi. Pivoting at least one of the gripping tools (30', 32, 34) about the second extension arm pivot point (36") between position 2 and position 3, so that the gripped tire blank (200') is positioned in position 2.

16. Method for implementing a loading and unloading cycle of a tire vulcanizing machine (100) with tires (200, 200') according to claim 14, **characterized in that** method steps i. and/or iii. and/or v. and/or vii. and/or viii. and/or x. are carried out within a room height level deviating from a room height level of method steps ii. and/or iv. and/or vi. and/or ix.

17. Method for implementing a loading and unloading cycle of a tire vulcanizing machine (100) with tires (200, 200') according to claim 14, **characterized in that** the method step iii. and/or v. and/or viii. and/or x. takes place along the movement kinematics BK 1,2.

18. Method for implementing a loading and unloading cycle of a tire vulcanizing machine (100) with tires (200, 200') according to claim 14 or 15, **characterized in that** the method step vii. and/or xi. takes place along the movement kinematics BK 2,3.

19. Production plant for manufacturing tires comprising at least one tire vulcanizing machine (100) and at least one transport device (60) and at least one blank stand (203) and at least one handling device (30) according to any one of claims 1 to 13.

## Revendications

1. Dispositif de manutention (30) pour pneus (200, 200'), présentant au moins un bras en porte-à-faux (36), dans lequel ledit au moins un bras en porte-à-faux (36) est fixé par un premier point de pivotement de bras en porte-à-faux (36') sur un logement (35) de telle sorte qu'un pivotement dudit au moins un bras en porte-à-faux (36) par rapport au logement (35) est soutenu, et ledit au moins un bras en porte-à-faux (36) présente un deuxième point de pivotement de bras en porte-à-faux (36") de sorte qu'au moins un outil de préhension (30', 32, 34) est accouplé audit au moins un bras en porte-à-faux (36), et dans lequel au moins un deuxième outil de préhension (30', 32, 34) est accouplé au deuxième point de pivotement de bras en porte-à-faux (36"), et les au moins deux outils de préhension (30', 32, 34) sont pivotants par rapport à au moins un point de pivotement de bras en porte-à-faux (36', 36"), dans lequel l'accouplement des au moins deux outils de préhension (30', 32, 34) au deuxième point de pivotement de bras en porte-à-faux (36") comprend un bras d'outil (39), dans lequel les au moins deux outils de préhension (30', 32, 34) sont accouplés par l'intermédiaire respectivement d'un logement d'outil de préhension (38), et dans lequel l'accouplement des outils de préhension (30', 32, 34) est effectué de telle sorte qu'un pivotement le long d'une cinématique de mouvement BK 2,3 d'au moins un outil de préhension (30', 32, 34) est soutenu,
**caractérisé en ce que** les cinématiques de mouvement BK 2,3 des au moins deux outils de préhension (30', 32, 34) sont concentriques ou congruentes les unes par rapport aux autres.

2. Dispositif de manutention (30) pour pneus (200, 200') selon la revendication 1, **caractérisé en ce que** la cinématique de mouvement BK 2,3 est en forme d'arc de cercle.

3. Dispositif de manutention (30) pour pneus (200, 200') selon la revendication 2, **caractérisé en ce que** la cinématique de mouvement BK 2,3 permet de réaliser un trajet de mouvement qui correspond à la mesure d'arc allant jusqu'à 360 degrés.

4. Dispositif de manutention (30) pour pneus (200, 200') selon la revendication 1, **caractérisé en ce que** le dispositif de manutention (30) présente au moins un degré de liberté linéaire, non parallèle au plan de pivotement de sorte que les outils de préhension (30', 32, 34) peuvent être déplacés sur différents niveaux de hauteur de plafond.

5. Dispositif de manutention (30) pour pneus (200, 200') selon la revendication 4, **caractérisé en ce que** ledit au moins un degré de liberté linéaire est soutenu par le logement (35) et/ou un point de pivotement de bras en porte-à-faux (36', 36") et/ou un logement d'outil de préhension (38) et/ou au moins un outil de préhension (30', 32, 34).

6. Dispositif de manutention (30) pour pneus (200, 200') selon la revendication 1, **caractérisé en ce que** les au moins deux outils de préhension (30', 32, 34) sont accouplés au deuxième point de pivotement de bras en porte-à-faux (36") de telle sorte que des fonctions de manutention de chargement et de déchargement sont réalisables par le dispositif de manutention (30) pour au moins une machine de vulcanisation de pneus (100).

7. Dispositif de manutention (30) pour pneus (200, 200') selon la revendication 1, **caractérisé en ce que** le dimensionnement en longueur du bras en porte-à-faux (36) et/ou sa capacité de course de pivotement soutiennent un espace de manutention qui comprend des points de fonctionnement dans la machine de vulcanisation de pneus (100) et un dispositif de transport (60) et un banc pour pneu cru (302).

8. Dispositif de manutention (30) pour pneus (200, 200') selon la revendication 1, **caractérisé en ce que** le dimensionnement en grandeur du dispositif de manutention (30) soutient des mouvements de pivotement des au moins deux outils de préhension (30', 32, 34) entre les positions 1, 2 et 3.

9. Dispositif de manutention (30) pour pneus (200, 200') selon la revendication 1, **caractérisé en ce que** les mouvements de pivotement ont lieu le long d'une cinématique de mouvement BK 1,2 et/ou de la cinématique de mouvement BK 2,3.

10. Dispositif de manutention (30) pour pneus (200, 200') selon la revendication 1, **caractérisé en ce que** quatre outils de préhension (30', 32, 34) sont accouplés au deuxième point de pivotement de bras en porte-à-faux (36").

11. Dispositif de manutention (30) pour pneus (200, 200') selon la revendication 10, **caractérisé en ce que** respectivement deux outils de préhension (30', 32, 34) sont agencés en sandwich par paire.

12. Dispositif de manutention (30) pour pneus (200, 200') selon la revendication 1, **caractérisé en ce qu'**au moins un outil de préhension (30') est réalisé sous forme d'outil de préhension de déchargement (32) ayant des propriétés de préhension optimisées pour des pneus finis (200).

13. Dispositif de manutention (30) pour pneus (200, 200') selon la revendication 1, **caractérisé en ce qu'**au moins un outil de préhension (30') est réalisé sous forme d'outil de préhension de chargement (34) ayant des propriétés de préhension optimisées pour des pneus crus (200').

14. Procédé permettant de réaliser un cycle de chargement et de déchargement avec des pneus (200, 200') d'une machine de vulcanisation de pneus (100) à l'aide d'un dispositif de manutention (30) selon l'une quelconque des revendications précédentes, présentant les étapes de manutention consistant à
i) positionner un premier outil de préhension (30', 34) dans une position 3,
ii) saisir un pneu cru (200') préparé préalablement avec le premier outil de préhension (30', 34) positionné dans la position 3,
iii) pivoter le dispositif de manutention (30) autour d'un premier point de pivotement de bras en porte-à-faux (36') de sorte qu'un deuxième outil de préhension (30', 32) est pivoté d'une position 2 à une position 1,
iv) saisir le pneu fini (200) dans l'espace de traitement (110) de la machine de vulcanisation de pneus (100),
v) pivoter le dispositif de manutention (30) autour du premier point de pivotement de bras en porte-à-faux (36') de sorte que le deuxième outil de préhension (30', 32) avec le pneu fini (200) saisi est pivoté de la position 1 à la position 2,
vi) déposer le pneu fini (200) sur un dispositif de transport (60),
vii) pivoter au moins l'un des outils de préhension (30', 32, 34) autour du deuxième point de pivotement de bras en porte-à-faux (36") entre la position 2 et la position 3 de sorte que le pneu cru saisi (200') est positionné à la position 2,
viii) pivoter le dispositif de manutention (30) autour du premier point de pivotement de bras en porte-à-faux (36') de sorte que le premier outil de préhension (30', 34) avec le pneu cru saisi (200') est pivoté de la position 2 à la position 1,
ix) déposer le pneu cru (200') dans l'espace de traitement (110) de la machine de vulcanisation de pneus (100),
x) pivoter le dispositif de manutention (30) autour du premier point de pivotement de bras en porte-à-faux (36') de sorte que le premier outil de préhension (30', 34) est pivoté de la position 1 à la position 2.

15. Procédé permettant de réaliser un cycle de chargement et de déchargement avec des pneus (200, 200') d'une machine de vulcanisation de pneus (100) selon la revendication 14, **caractérisé par** une étape de manutention supplémentaire consistant à
xi) pivoter au moins l'un des outils de préhension (30', 32, 34) autour du deuxième point de pivotement de bras en porte-à-faux (36") entre la position 2 et la position 3 de sorte que le pneu cru saisi (200') est positionné à la position 2.

16. Procédé permettant de réaliser un cycle de chargement et de déchargement avec des pneus (200, 200') d'une machine de vulcanisation de pneus (100) selon la revendication 14, **caractérisé en ce que** les étapes de procédé i) et/ou iii) et/ou v) et/ou vii) et/ou viii) et/ou x) sont effectuées à l'intérieur d'un niveau de hauteur de plafond différent d'un niveau de hauteur de plafond des étapes de procédé ii) et/ou iv) et/ou vi) et/ou ix).

17. Procédé permettant de réaliser un cycle de chargement et de déchargement avec des pneus (200, 200') d'une machine de vulcanisation de pneus (100) selon la revendication 14, **caractérisé en ce que** les étapes de procédé iii) et/ou v) et/ou viii) et/ou x) sont effectuées le long de la cinématique de mouvement BK 1,2.

18. Procédé permettant de réaliser un cycle de chargement et de déchargement avec des pneus (200, 200') d'une machine de vulcanisation de pneus (100) selon la revendication 14 ou 15, **caractérisé en ce que** les étapes de procédé vii) et/ou xi) sont effectuées le long de la cinématique de mouvement BK 2,3.

19. Installation de production destinée à la fabrication de pneus, présentant au moins une machine de vulcanisation de pneus (100) et au moins un dispositif de transport (60) et au moins un banc pour pneu cru (203) et au moins un dispositif de manutention (30) selon l'une quelconque des revendications 1 à 13.
